# EUROPÄISCHE PATENTSCHRIFT

(11) **EP 3 767 424 B1**
(45) Veröffentlichungstag und Bekanntmachung des Hinweises auf die Patenterteilung: **08.06.2022**
(21) Anmeldenummer: 20178872.6
(22) Anmeldetag: 09.06.2020
(51) Int. Cl.: G05B 19/042

(54) **MENGENREGLEREINHEIT UND KORRESPONDIERENDES VERFAHREN**
VOLUME REGULATOR UNIT AND CORRESPONDING METHOD
UNITÉ DE RÉGULATION DE QUANTITÉ ET PROCÉDÉ CORRESPONDANT

(30) Priorität: 15.07.2019 DE 202019103892 U
(43) Veröffentlichungstag der Anmeldung: 20.01.2021
(73) Patentinhaber: Neoperl GmbH, 79379 Müllheim (DE)
(72) Erfinder: Weis, Christoph, 79379 Müllheim (DE)
(74) Vertreter: Mertzlufft-Paufler, Cornelius

(56) Entgegenhaltungen:
- DE-U1-202017 101 427
- GB-A- 626 608
- US-A1- 2011 066 297
- US-A1- 2015 101 686

## Beschreibung

Die Erfindung betrifft eine Mengenreglereinheit, mit der wenigstens zwei unterschiedliche Durchflusszustände, die voneinander unterschiedliche Durchfluss-Druck-Regelkurven umsetzen, realisierbar sind, wobei eine Schalteinheit ausgebildet ist, die zu einem Umschalten zwischen den wenigstens zwei unterschiedlichen Durchflusszuständen eingerichtet ist.

Die Erfindung betrifft weiter ein Verfahren zur Steuerung eines Durchflussstroms.

Der Betrieb von Mengenreglereinheiten unterliegt in verschiedenen Ländern unterschiedlichen gesetzlichen Anforderungen. Häufig wird vorgeschrieben, dass in sanitären Anlagen wie beispielsweise Duschen der Durchflussstrom unterhalb einer vorgegebenen Grenze liegen muss.

Aus DE 20 2017 101427 U1 ist ein Durchflussmengenregler bekannt, der einen scheibenförmigen, deformierbaren Regelkörper aufweist, der anströmseitig zu einem Grundkörper angeordnet ist, so dass zwischen dem Regelkörper und dem Grundkörper ein Steuerspalt gebildet ist.

Aus US 2015/101686 A1 ist ein Durchflussregelventil bekannt, der einen Ventilkörper hat, der einen Druckdifferenzvorrichtungsteil und einen Ventilsitz aufweist.

Aus GB 626 608 A ist eine Flüssigkeitsregelungsvorrichtung zur Abgabe einer oder von zweier verschiedener Flüssigkeitszufuhrmengen, wie zum Beispiel Wasser mit unterschiedlichen Temperaturen, für die Verwendung in einer Waschmaschine bekannt.

Aus der US 2011/0066297 A1 ist ein System und ein Verfahren zur Fernüberwachung und Steuerung von Wasser-, Elektrizitäts- und Gaszählern und eine Energiegewinnungseinheit bekannt.

Der Erfindung liegt die Aufgabe zu Grunde, eine breite Auswahl von Duschbrausen im Einklang mit derartigen gesetzlichen Anforderungen betreiben zu können.

Zur Lösung der genannten Aufgabe werden erfindungsgemäß die Merkmale von Anspruch 1 vorgeschlagen. Insbesondere wird somit erfindungsgemäß bei einer Mengenreglereinheit der eingangs beschriebenen Art vorgeschlagen, dass in der Schalteinheit ein Schaltprofil hinterlegt ist, bei welchem in einem Ablauf ein vorgegebener Wechsel zwischen diesen wenigstens zwei, beispielsweise drei oder mehr als drei, unterschiedlich definierten Durchflussströmen erfolgt. Von Vorteil ist dabei, dass gesetzliche Anforderungen auch dann erfüllbar sind, wenn eine vorgegebene Duschbrause eigentlich einen höheren Durchflussstrom zum ordnungsgemäßen Betrieb benötigt. Die Erfindung hat erkannt, dass durch Anwendung eines Schaltprofils sichergestellt werden kann, dass die gesetzlichen Vorgaben im zeitlichen Mittel sicher eingehalten werden.

Die Erfindung ermöglicht es, zumindest kurzzeitig einen ausreichenden Durchfluss bereitzustellen, um auch Brausen, die beispielsweise im Spa-Bereich üblich sind, nutzen zu können, wenn die Durchflussmenge gesetzlich beschränkt ist. So sind beispielsweise Massagefunktionen mit einem verbesserten Komfort nutzbar, oder es ist ein Ausspülen von Shampoo auch bei langem Haar oder bei natürlich weichen Wasser verbessert ausführbar. Auch ist es erreichbar, dass Regenbrausen oder andere Brausen, die für einen höheren Durchfluss ausgelegt sind, besser zur Wirkung kommen.

Allgemein kann ein definierter Durchflussstrom als ein Beispiel eines Durchflusszustandes beispielsweise dadurch charakterisiert sein, dass er ein in einem Arbeits-Druckbereich druckunabhängiges Plateau in einer Kurve, die den Durchfluss in Abhängigkeit vom Druckabfall über der Mengenreglereinheit wiedergibt, beschreibt. Der Begriff "definierter Durchflussstrom" kann daher in der vorliegenden Beschreibung beispielsweise als ein Grenzwert des Durchflusses pro Zeiteinheit in einen bestimmten Arbeits-Druckbereich verstanden werden.

Der Ablauf, in welchem sich der Wechsel zwischen den Durchflusszuständen vollzieht, ist ein zeitlicher Ablauf. Somit kann beispielsweise ein Wechsel zu festgelegten Zeitpunkten oder aufgrund von zeitlich definierten Kriterien ausgelöst werden.

Bei einer vorteilhaften Ausgestaltung kann vorgesehen sein, dass wenigstens ein Durchflusszustand der wenigstens zwei unterschiedlichen Durchflusszustände eine Durchfluss-Druck-Regelkurve eines Mengenreglers umsetzt. Somit ist ein definierter Durchflussstrom als Durchflusszustand realisierbar, der zumindest in einem Arbeits-Druckbereich konstant ist und der daher zu einer Einhaltung von vorgegebenen Durchflussmengen in einer vorgegebenen Zeitspanne verwendbar ist.

Bei einer vorteilhaften Ausgestaltung kann vorgesehen sein, dass wenigstens zwei Durchflusszustände, insbesondere alle Durchflusszustände durch einen veränderlichen Mengenregler oder durch jeweils einen Mengenregler gebildet sind. Erfindungsgemäß ist vorgesehen, dass die Schalteinheit einen Treiber hat, der durch strömendes Wasser antreibbar ist. Von Vorteil ist dabei, dass Energiespeicher oder Energieversorgungsanschlüsse verzichtbar sind. Beispielsweise kann hierbei vorgesehen sein, dass das Wasser im Durchflussstrom der Mengenreglereinheit strömt. Somit sind zusätzliche Strömungsleitungen verzichtbar. Der Ablauf der Wechsel zwischen den Durchflusszuständen kann hierbei beispielsweise direkt mechanisch oder elektrisch bewirkt sein. Bei einer vorteilhaften Ausgestaltung kann vorgesehen sein, dass die Schalteinheit mechanisch ausgebildet ist. Von Vorteil ist dabei, dass stromführende Teile in der Nähe des strömenden Wassers verzichtbar sind. Beispielsweise kann die Schalteinheit eine entsprechend ausgestaltete Kurvenscheibe aufweisen.

Bei einer vorteilhaften Ausgestaltung kann vorgesehen sein, dass die Schalteinheit elektrisch ausgebildet ist. Von Vorteil ist dabei, dass praktisch beliebige Schaltprofile einrichtbar sind.

In einem nicht von der Erfindung umfassten Ausführungsbeispiel kann die Schalteinheit aus einem Energiespeicher, beispielsweise einem Akku oder eine Batterie, betrieben sein. Von Vorteil ist dabei, dass die Schalteinheit auf einfache Weise gegen ein Eindringen von Feuchtigkeit abdichtbar ist.

Bei einer vorteilhaften Ausgestaltung der Erfindung kann vorgesehen sein, dass der Treiber einen Generator aufweist. Von Vorteil ist dabei, dass ein Austauschen oder Aufladen eines Energiespeichers verzichtbar ist.

Bei einer vorteilhaften Ausgestaltung kann vorgesehen sein, dass die Mengenreglereinheit wenigstens einen Mengenregler mit einem einstellbaren Regelspalt aufweist. Somit kann auf einfache Weise zwischen wenigstens zwei Durchflussströmen, die jeweils einen Durchflusszustand repräsentieren, umgestellt werden. Beispielsweise kann der Regelspalt motorisch einstellbar sein. Somit kann ein vorgegebenes Schaltprofil einfach automatisch abgefahren werden. Insbesondere kann somit eine kontinuierliche Veränderung des Durchflussstromes erreichbar sein.

Allgemein kann ein Mengenregler beispielsweise durch eine Durchfluss-Druck-Regelkurve charakterisiert werden, die in einem Arbeits-Druckbereich ein Plateau zeigt, welches zu einem druckunabhängigen Durchflussstrom als Durchflusszustand gehört.

Bei einer vorteilhaften Ausgestaltung kann vorgesehen sein, dass die Mengenreglereinheit wenigstens einen wahlweise zuschaltbaren Mengenregler aufweist. Somit sind auch Mengenregler mit fest vorgegebenen Regelspalt verwendbar. Es sind somit einfach diskrete Veränderungen des Durchflussstroms realisierbar. Es können somit zwei oder mehr als zwei identische oder unterschiedliche Mengenregler zuschaltbar sein.

Bei einer vorteilhaften Ausgestaltung kann vorgesehen sein, dass die Mengenreglereinheit wenigstens eine wahlweise zuschaltbare Drossel aufweist. Somit ist ein ungeregelter Durchfluss zumindest in einem Durchflusszustand einstellbar. Es kann auch vorgesehen sein, dass die Mengenreglereinheit alternativ oder zusätzlich einen wahlweise zuschaltbaren Bypass aufweist. Somit ist ein freier Durchfluss zumindest in einem Durchflusszustand einstellbar. Ein Bypass kann beispielsweise als Grenzwert einer Drossel in Richtung immer kleineren Strömungswiderstandes beschrieben werden.

Bei einer vorteilhaften Ausgestaltung kann vorgesehen sein, dass ein Durchflussmesser zu einer Messung eines Durchflussstroms durch die Mengenreglereinheit ausgebildet ist. Somit kann in eine Steuerung des Ablaufs der Durchflusszustände beispielsweise auch eine bisher verbrauchte Durchflussmenge eingehen. Beispielsweise kann vorgesehen sein, dass die Durchflussmenge durch eine, insbesondere die bereits erwähnte, Drossel und/oder durch einen, insbesondere den bereits erwähnten, Bypass erfasst wird.

Es kann vorgesehen sein, dass die Schalteinheit zu einem Wechsel zwischen den wenigstens zwei unterschiedlichen Durchflusszuständen, sobald der Durchflussmesser ein Erreichen einer vorgegebenen Durchflussmenge erfasst, eingerichtet ist. Es sind damit auch Kriterien zum Wechsel zwischen den Durchflusszuständen verwendbar, die nur indirekt zeitbasiert sind und beispielsweise das Erreichen einer Durchflussmenge repräsentieren. Hier ist es möglich, im Anschluss durch Umschalten auf Mengenregler den Durchfluss zu strecken, um den vorgegebenen Durchflussstrom zumindest im Mittel über einen vergleichsweise langen Zeitraum, insbesondere einen Zeitraum, der deutlich länger als eine Zeitkonstante des Schaltprofils ist, zu erreichen.

Bei einer vorteilhaften Ausgestaltung kann vorgesehen sein, dass die Schalteinheit einen Speicher hat, in dem das Schaltprofil hinterlegt ist. Somit ist ein individuelles Schaltprofil einfach vorgebbar. Der Speicher kann beispielsweise elektrisch auslesbar ausgebildet sein. Somit kann eine elektrische Ansteuerung des Schaltprofils einfach realisiert werden. Vorzugsweise ist der Speicher als veränderlicher Speicher ausgebildet. Somit sind unterschiedliche Schaltprofile hinterlegbar.

Bei einer vorteilhaften Ausgestaltung kann vorgesehen sein, dass die Schalteinheit zum Aufbau einer Datenverbindung, über welche das Schaltprofil veränderbar ist, eingerichtet ist. Dies ermöglicht eine einfache Veränderung des hinterlegten Schaltprofils, beispielsweise über ein angeschlossenes externes Gerät.

Bei einer vorteilhaften Ausgestaltung kann vorgesehen sein, dass die Datenverbindung drahtlos ausgebildet ist. Dies vereinfacht eine Abkapselung der Mengenreglereinheit gegen eindringende Feuchtigkeit.

Bei einer vorteilhaften Ausgestaltung kann vorgesehen sein, dass die wenigstens zwei unterschiedlich definierten Durchflusszustände jeweils einen von Null verschiedenen Durchflussstrom haben. Somit ist ein Schaltprofil realisierbar, bei dem der Wasserstrom nicht abbricht.

Alternativ oder zusätzlich werden zur Lösung der genannten Aufgabe erfindungsgemäß die Merkmale des nebengeordneten, auf ein Verfahren gerichteten Anspruchs vorgeschlagen. Somit wird erfindungsgemäß zur Lösung der genannten Aufgabe bei einem Verfahren zur Steuerung eines Durchflussstroms insbesondere vorgeschlagen, dass in einem Ablauf ein vorgegebener Wechsel zwischen wenigstens zwei unterschiedlichen Durchflusszuständen, die voneinander unterschiedliche Durchfluss-Druck-Regelkurven umsetzen, nach einem hinterlegten Schaltprofil automatisch ausgeführt wird. Somit ist ein Beispiel für eine Verwendung einer erfindungsgemäßen Mengenreglereinheit, insbesondere wie zuvor beschrieben und/oder nach einem der auf einen Mengenreglereinheit gerichteten Ansprüche, aufgezeigt. Insbesondere ist somit erreichbar, dass ein zeitlich begrenzter, hoher Durchflussstrom durch Zeitabschnitte mit abgesenkten Durchflussstrom kompensiert wird. Der Ablauf kann hierbei zeitlich und/oder durch Nebenbedingungen definiert sein.

Bei einer vorteilhaften Ausgestaltung kann vorgesehen sein, dass zum Wechsel zwischen wenigstens zwei unterschiedlich definierten Durchflussströmen ein Steuerspalt eines Mengenreglers verändert wird. Somit ist ein einfaches Verfahren beschrieben, unterschiedliche Durchflussströme einzustellen. Diese Veränderung kann beispielsweise motorisch erfolgen, bevorzugt elektrisch, was für eine elektronische Ansteuerung von Vorteil sein kann.

Bei einer vorteilhaften Ausgestaltung kann vorgesehen sein, dass zum Wechsel zwischen wenigstens zwei unterschiedlich definierten Durchflusszuständen wenigstens ein Mengenregler und/oder wenigstens eine Drossel zu- oder abgeschaltet wird. Alternativ oder zusätzlich zu der wenigstens einen Drossel ist auch wenigstens ein Bypass zu- und/oder abschaltbar. Somit sind beispielsweise verschiedene Mengenregler mit jeweils unterschiedlichen oder gleichen Durchflussströmen verwendbar, insbesondere parallel zueinander, wobei insgesamt an der Mengenreglereinheit eingestellte Durchflussströme durch Aktivierung oder Deaktivierung einzelner dieser Mengenregler realisierbar sind. Es ist somit auch das gesamte Regelverhalten qualitativ veränderbar, indem eine Drossel und/oder ein Bypass in einer Anordnung mit wenigstens einem Mengenregler zu- und/oder abgeschaltet wird.

Bei einer vorteilhaften Ausgestaltung kann vorgesehen sein, dass der zeitliche Ablauf zyklisch wiederholt wird. Von Vorteil ist dabei, dass zeitliche Mittelwerte, die über Zeitintervalle, die länger als ein Zyklus sind, gebildet werden, einfach definierbar sind.

Bei einer vorteilhaften Ausgestaltung kann vorgesehen sein, dass ein zeitlicher Mittelwert des Durchflussstroms konstant gehalten wird. Somit ist auf einfache Weise ein gesetzlich vorgegebener Grenzwert im zeitlichen Mittel einhaltbar. Beispielsweise kann der zeitliche Mittelwert, gemessen über wenigstens eine Zykluszeit, über mehrere Zyklen konstant gehalten sein. Beispielsweise kann der zeitliche Mittelwert über mehrere Minuten gebildet sein, während sich ein Zyklus über wenige Minuten, beispielsweise 1 Minute oder weniger als 1 Minute, erstrecken kann.

Bei einer vorteilhaften Ausgestaltung kann vorgesehen sein, dass der definierte Durchflussstrom zu einem ersten Zeitpunkt erhöht und zu einem zweiten Zeitpunkt verringert wird. Hierbei kann der zweite Zeitpunkt gegenüber dem ersten Zeitpunkt beispielsweise später oder früher liegen. Von Vorteil ist dabei, dass ein erhöhter Wasserverbrauch durch einen anschließenden erniedrigten Wasserverbrauch kompensiert werden kann.

Bei einer vorteilhaften Ausgestaltung kann vorgesehen sein, dass die wenigstens zwei unterschiedlichen Durchflusszustände jeweils von Null verschiedene Durchflussströme haben. Somit ist ein unterbrechungsfreier Wasserstrom erreichbar.

Bei einer vorteilhaften Ausgestaltung kann vorgesehen sein, dass in einem ersten Schritt wenigstens ein Durchflussstrom gemessen wird und dass in einem zweiten Schritt das Schaltprofil aufgrund des gemessenen Durchflussstroms automatisch berechnet wird. Es ist somit eine Lernfunktion bereitstellbar, mit der sich eine Mengenreglereinheit selbsttätig an tatsächlich vorherrschende Umgebungsbedingungen anpassen kann. Beispielsweise kann das Schaltprofil durch Berechnung von Schaltzeitpunkten und/oder durch Berechnung von definierten Durchflussströmen ermittelt werden. Hierbei kann es günstig sein, wenn der Durchflussstrom in einem Durchflusszustand gemessen wird, in welchem eine Drossel und/oder ein Bypass durchströmt wird. Dies ermöglicht die Einhaltung von Normvorgaben oder gesetzlichen Vorgaben auch bei abschnittsweise ungeregelten Durchflussströmen.

Die Erfindung betrifft weiter eine Verwendung einer erfindungsgemäßen Mengenreglereinheit, insbesondere wie zuvor beschrieben und/oder nach einem der auf eine Mengenreglereinheit gerichteten Ansprüche, an einer Dusche. Gerade beim Duschen sind die gesetzlichen Anforderungen zur Begrenzung des Wasserverbrauchs streng, während viele Duschbrausen funktionsbedingt einen höheren Wasserverbrauch erfordern. Die erfindungsgemäße Verwendung ermöglicht es, diese zwei an sich widersprüchlichen Tendenzen zu vereinigen.

Besonders günstig ist es dabei, wenn die Mengenreglereinheit zur Ausführung eines erfindungsgemäßen Verfahrens, insbesondere wie zuvor beschrieben und/oder nach einem der auf ein Verfahren gerichteten Ansprüche, an der Dusche eingesetzt wird.

Allgemein kann gesagt werden, dass die erfindungsgemäße Mengenreglereinheit als selbstständiges Modul ausbildbar ist. Dies ermöglicht eine Nachrüstung in bestehende Anlagen.

Alternativ kann die Mengenreglereinheit auch in einen Brausekopf oder in eine Armatur integriert sein. Dies ermöglicht eine harmonische Gestaltung eines äußeren Erscheinungsbildes.

Die Erfindung wird nun anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt in schematischen Darstellungen:
- Fig. 1: eine erste erfindungsgemäße Mengenreglereinheit,
- Fig. 2: eine zweite erfindungsgemäße Mengenreglereinheit,
- Fig. 3: eine dritte erfindungsgemäße Mengenreglereinheit,
- Fig. 4: eine erfindungsgemäße Verwendung einer erfindungsgemäßen Mengenreglereinheit,
- Fig. 5: eine Darstellung eines zeitabhängigen Durchflussstromes zur Erläuterung eines erfindungsgemäßen Verfahrens,
- Fig. 6: eine vierte erfindungsgemäße Mengenreglereinheit,
- Fig. 7: eine fünfte erfindungsgemäße Mengenreglereinheit
- Fig. 8: ein Durchflussmengen-Zeit-Diagramm zur Erläuterung einer Variante der Erfindung.

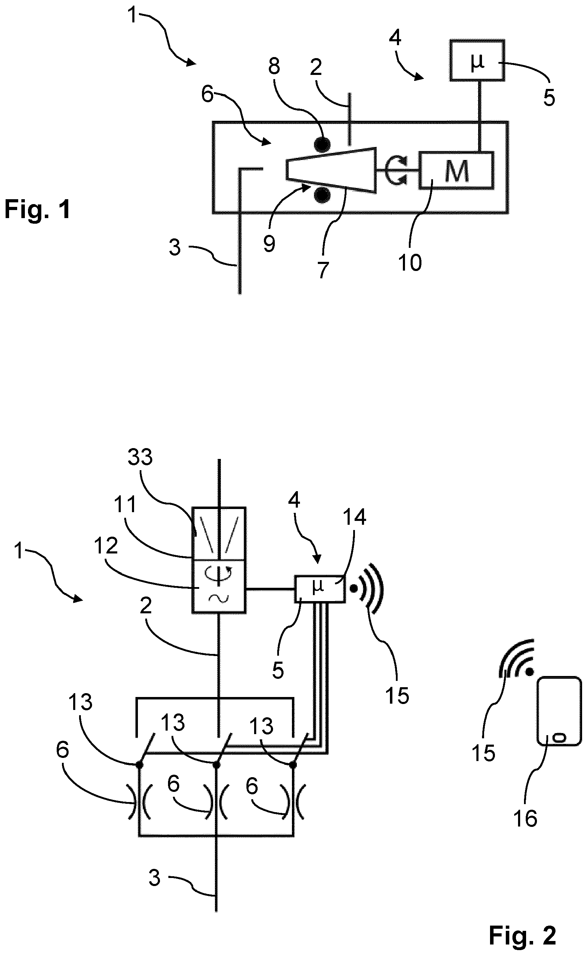

Fig. 1 zeigt eine im Ganzen mit 1 bezeichnete erfindungsgemäße Mengenreglereinheit.

In die Mengenreglereinheit 1 läuft ein einlaufender Wasserstrom 2 ein, und aus der Mengenreglereinheit 1 läuft ein auslaufender Wasserstrom 3 aus.

In noch genauer zu beschreibender Weise realisiert die Mengenreglereinheit 1 wenigstens zwei unterschiedlich definierte Durchflussströme als wenigstens zwei unterschiedliche Durchflusszustände im auslaufenden Wasserstrom 3. Dies bedeutet im Ausführungsbeispiel, dass der auslaufende Wasserstrom 3 - zumindest in einem Arbeits-Druckbereich - unabhängig von einer Druckdifferenz zwischen dem einlaufenden Wasserstrom 2 und dem auslaufenden Wasserstrom 3 und somit beispielsweise unabhängig von einem Versorgungsdruck einen definierten (beispielweise begrenzten) Durchflussstrom realisiert, der verändert werden kann.

Hierzu ist eine Schalteinheit 4 ausgebildet, mit welcher die Veränderung des definierten Durchflussstroms oder allgemeiner des Durchflusszustands bewirkbar ist. Im vorliegenden Ausführungsbeispiel hat die Schalteinheit 4 einen Mikrokontroller 5.

In diesen Mikrokontroller 5 ist ein Schaltprofil hinterlegt, welcher nach einem vorgegebenen Ablaufschema die Veränderung des definierten Durchflussstroms als Abfolge von Durchflusszuständen bewirkt. Somit ergibt sich in einem zeitlichen Ablauf ein vorgegebener Wechsel zwischen den wenigstens zwei unterschiedlichen Durchflusszuständen, die realisierbar sind.

Die Mengenreglereinheit 1 hat einen Mengenregler 6, der in an sich bekannter Weise einen Regelkern 7 und einen Regelkörper 8 aufweist, zwischen denen ein Regelspalt 9 ausgebildet ist. Hierbei ist der Regelkörper 8 elastisch verformbar ausgebildet, so dass eine Änderung einer Druckdifferenz zwischen einlaufendem Wasserstrom 2 und auslaufendem Wasserstrom 3 zu einer Verformung des Regelkörpers 8 führt. Diese Verformung verändert einen lichten Öffnungsquerschnitt des Regelspalts 9. Dies ist hierbei in an sich bekannter Weise so eingerichtet, dass eine Druckerhöhung zu einer Verkleinerung des Regelspalts 9 führt, während eine Druckverminderung zu einer Vergrößerung des Regelspalts 9 führt. Es ergibt sich so ein konstanter (definierter) Durchflussstrom innerhalb eines Arbeits-Druckbereichs dieser Regelung.

Die Mengenreglereinheit 1 hat weiter einen Motor 10, mit dem der Regelkern 7 verstellbar ist. Somit kann der definierte Durchflussstrom durch eine Verstellung des lichten Öffnungsquerschnitts des Regelspalts 9 bei unverformtem Regelkörper 8 kontinuierlich verändert werden.

Der Mikrokontroller 5 steuert diesen Motor 10 entsprechend an, um die Verstellung des Regelspalts 9 nach dem hinterlegten Schaltprofil anzusteuern und auszuführen. Der Motor 10 ist als elektrisch arbeitender Motor ausgebildet.

Bei einem weiteren, nicht weiter dargestellten Ausführungsbeispiel ist die Ansteuerung des Regelkerns 7 rein mechanisch ausgeführt, beispielsweise über eine Kurvenscheibe, die von einem vorzugsweise aus nicht-elektrischer Energie gespeisten Motor bewegt wird.

Fig. 2 zeigt eine weitere schematisierte Darstellung einer weiteren erfindungsgemäßen Mengenreglereinheit 1. Funktionell und/oder konstruktiv zu den vorangehenden Ausführungsbeispielen gleichartige oder identische Bauteile und Funktionseinheiten sind mit denselben Bezugszeichen bezeichnet und nicht gesondert beschrieben. Die Ausführungen zu Fig. 1 gelten daher zu Fig. 2 entsprechend.

Die Mengenreglereinheit 1 aus Fig. 2 weist zusätzlich einen Treiber 11 auf, mit welchem die Schalteinheit 4 betreibbar ist.

Hierzu weist der Treiber 11 einen Generator 12 auf, der von dem einlaufenden Wasserstrom 2 angetrieben wird und die elektrische Schalteinheit 4 mit elektrischer Energie versorgt. Der Generator 12 wird hierbei von einer Turbine 33 angetrieben, die einen Teil der Strömungsenergie des Wassers in eine mechanische Energieform umwandelt, so dass der Generator 12 diese mechanische Energie in elektrische Energie umwandeln kann. Der Generator 12 und die Turbine 33 können separat voneinander oder in eine Einheit integriert ausgebildet sein.

Die Mengenreglereinheit 1 weist mehrere Mengenregler 6 auf, die zueinander parallel geschaltet sind.

Jeder Mengenregler 6 ist durch ein zugeordnetes Ventil 13 zuschaltbar und abschaltbar, also aktivierbar und deaktivierbar.

Die Ventile 13 werden elektrisch über die Schalteinheit 4 betätigt. In der Schalteinheit 4 ist ein Speicher 14, in der wenigstens ein Schaltprofil hinterlegt ist. Gemäß diesem Schaltprofil wird die Schalteinheit 4 die Ventile 13 einzeln oder gemeinsam öffnen und schließen, so dass sich unterschiedliche Durchflussströme einstellen. Die Mengenregler 6 können hierbei jeweils einheitliche Durchflussströme realisieren oder unterschiedliche Durchflussströme, so dass sich durch Kombination der einzelnen Mengenregler 6 im aktivierten Zustand eine Abstufung von realisierbaren definierten Durchflussströmen als Abfolge von Durchflusszuständen bilden lässt.

Die Schalteinheit 4 ist über eine drahtlose Datenverbindung 15 mit einem mobilen Endgerät 16 verbunden, mit welchem die hinterlegten Schaltprofile in dem Speicher 14 veränderbar oder austauschbar sind.

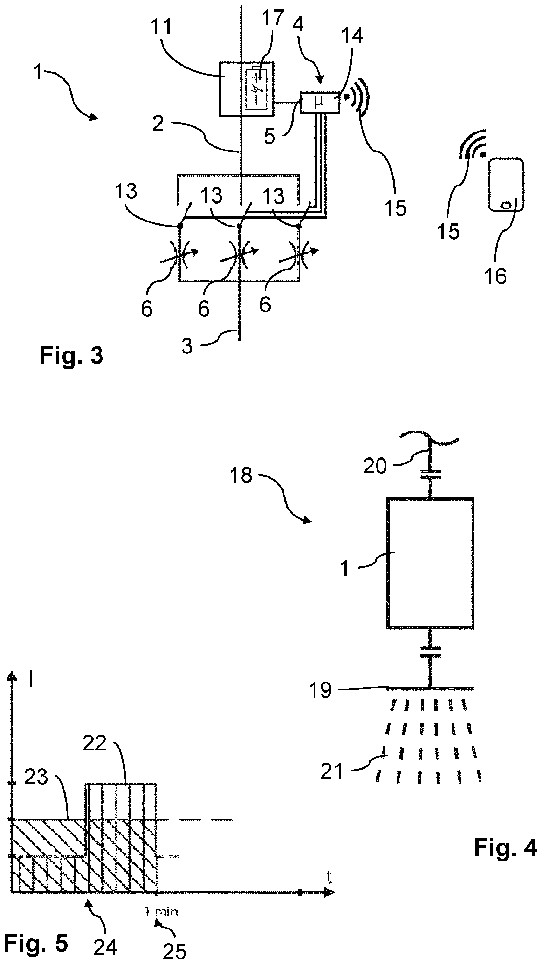

Fig. 3 zeigt eine schematische Darstellung eines nicht von der Erfindung umfassten Ausführungsbeispiels. Zu den vorangehenden Ausführungsbeispielen konstruktiv und/oder funktionell gleichartige oder identische Bauteile und Funktionseinheiten sind wieder mit denselben Bezugszeichen bezeichnet und nicht noch einmal gesondert beschrieben. Die Ausführungen zu dem vorangegangenen Ausführungsbeispiel gelten daher zu Fig. 3 entsprechend.

Das Ausführungsbeispiel gemäß Fig. 3 unterscheidet sich von den vorangegangenen Ausführungsbeispielen dadurch, dass der Treiber 11 einen Akku 17 oder eine Batterie hat, mit welcher die Schalteinheit 4 betreibbar ist.

Ferner unterscheidet sich das Ausführungsbeispiel nach Fig. 3 von dem Ausführungsbeispiel gemäß Fig. 2 dadurch, dass die Mengenregler 6 jeweils als veränderliche Mengenregler analog zu Fig. 1 ausgebildet sind. Die Schalteinheit 4 steuert nun die Ventile 13 und nach Bedarf je nach Vorgabe des Schaltprofils in dem Speicher 14 auch die veränderlichen Mengenregler 6 an. Die Kombination von zuschaltbaren Mengenregler und einstellbaren Mengenreglern ist auch bei den anderen Ausführungsbeispielen realisierbar.

Fig. 4 zeigt eine beispielhafte Verwendung einer der Mengenreglereinheiten 1 aus den Ausführungsbeispielen oder gemäß der Erfindung.

Eine Dusche 18 hat eine Duschbrause 19 und einen Wasseranschluss 20.

Zwischen der Duschbrause 19 und dem Wasseranschluss 20 ist die Mengenreglereinheit 1 derart eingebaut, dass der Wasseranschluss 20 den einlaufenden Wasserstrom 2 bereitstellt und die Duschbrause 19 den auslaufenden Wasserstrom 3 aufnimmt.

Der auslaufende Wasserstrom 3 bestimmt somit den Durchflussstrom im austretenden Wasserstrahl 21 der Duschbrause 19.

Fig. 5 dient zur Erläuterung des erfindungsgemäßen Verfahrens.

Dargestellt ist ein Diagramm des definierten Durchflussstroms I, also der zeitlichen Ableitung des Durchflusses, über der Zeit t.

Das Diagramm zeigt den zeitlichen Ablauf 22, der durch das Schaltprofil vorgegeben ist und der ein Schwanken um einen zeitlichen Mittelwert 23 des Durchflussstroms beschreibt.

Bis zu einem ersten Zeitpunkt 24 ist ein Durchflussstrom eingestellt, der niedriger als der zeitliche Mittelwert 23 ist. Zu diesem ersten Zeitpunkt 24 wird der definierte Durchflussstrom erhöht, beispielsweise durch Zuschalten eines Mengenreglers, Umschalten auf einen anderen Mengenregler und/oder Neueinstellung eines veränderlichen Mengenreglers. Zu einem zweiten Zeitpunkt 25 wird der Durchflussstrom wieder auf den niedrigeren Wert verringert, und der Zyklus beginnt erneut.

Die Fläche unter der Kurve des zeitlichen Ablaufs 22 ist gleich der Fläche unter dem zeitlichen Mittelwert 23, so dass sich insgesamt eine Einhaltung von gesetzlichen Vorgaben ergibt, auch wenn kurzzeitig von dieser Vorgabe abgewichen wird.

Im Ausführungsbeispiel nach Fig. 5 ist der zeitliche Verlauf als eine gestufte Funktion angenommen. Insbesondere bei Verwendung von Durchflussmessern 29 und/oder motorisch verstellbaren Mengenreglern 6 sind praktisch beliebige Kurven erreichbar.

Die Erfindung ermöglicht es, einen Durchflussstrom zeitlich zu integrieren und durch eine Schalteinheit sicherzustellen, dass eine Fläche unter einer Druchflussstromkurve in einem Zeitintervall eine Vorgabe nicht überschreitet.

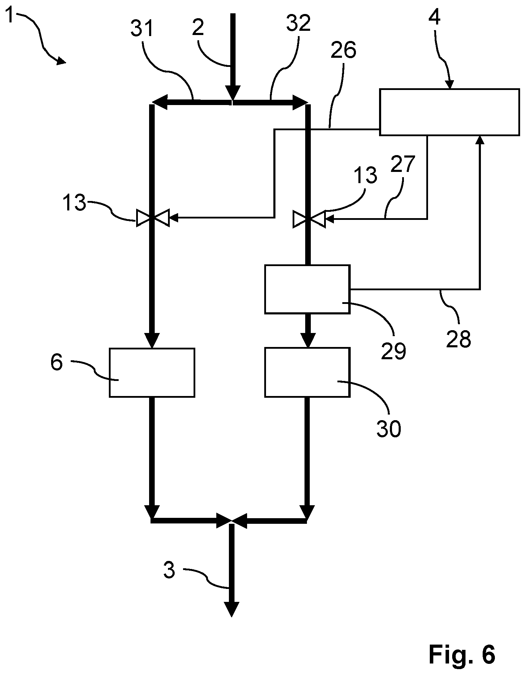

Fig. 6 zeigt eine schematische Darstellung eines weiteren erfindungsgemäßen Ausführungsbeispiels. Zu den vorangehenden Ausführungsbeispielen konstruktiv und/oder funktionell gleichartige oder identische Bauteile und Funktionseinheiten sind wieder mit denselben Bezugszeichen bezeichnet und nicht noch einmal gesondert beschrieben. Die Ausführungen zu den vorangegangenen Ausführungsbeispielen gelten daher zu Fig. 6 entsprechend.

Bei dem Ausführungsbeispiel gemäß Fig. 6 wird der eingehende Wasserstrom 2 in (wenigstens) zwei Teilströme 31, 32 aufgeteilt.

Ein Teilstrom 31 ist über einen Mengenregler 6 und ein Teilstrom 32 über eine Drossel 30 geführt. Diese Drossel 30 kann ein separates Bauteil sein, beispielsweise eine Lochscheibe oder Lochblende, oder sich durch einen Strömungswiderstand im Teilstrom 32 ergeben. Die Drossel 30 kann somit auch ein Bypass 39 sein, bei welchem sich der Strömungswiderstand über seine Länge nicht oder nicht nennenswert verändert, sondern im Wesentlichen konstant oder gleichbleibend ist.

Der Mengenregler 6 realisiert hierbei eine Durchfluss-Druck-Regelkurve, die ab einem bestimmten Druck, ab welchem ein Arbeits-Druckbereich beginnt, einen druckunabhängig konstanten Durchflussstrom beschreibt.

Die Drossel 30 realisiert hierbei eine Durchfluss-Druck-Regelkurve, die praktisch unbegrenzt, zum Beispiel nach einer Wurzelfunktion, ansteigt.

Die Schalteinheit 4 steuert Ventile 13 so an, dass entweder der Teilstrom 31 oder der Teilstrom 32 oder beide Teilströme 31, 32 aktiv ist/sind. Bei weiteren Ausführungsbeispielen ist eine andere Anzahl von Mengenreglern und/oder Drosseln ausgebildet, durch welche jeweils ein Teilstrom geführt ist.

Im Teilstrom 32 der Drossel 30 ist ein Durchflussmesser 29 angeordnet, mit welcher eine Durchflussmenge integriert erfassbar ist.

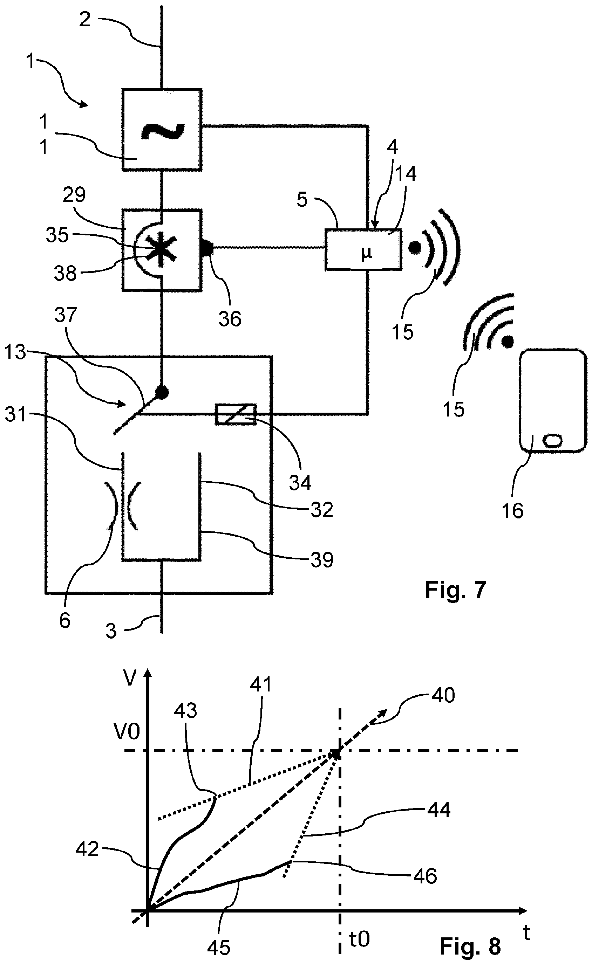

In einer konstruktiv einfach realisierbaren Variante kann der Durchflussmesser 29 vorzugsweise magnetisch und/oder optisch gekennzeichnete Flügel 38 eines Flügelrades 35 aufweisen (vgl. Fig. 7), wobei mit einem Sensor 36 eine Vorbeibewegung der gekennzeichneten Flügel 38 vorzugsweise magnetisch und/oder optisch erfassbar ist.

Bei Ausführungsbeispielen, bei denen ein Treiber 11 eine Turbine 33 aufweist, kann der Durchflussmesser 29 auch an der Turbine 33 oder mit der Turbine 33 ausgebildet sein.

Der Durchflussmesser 29 übermittelt seine Messdaten über die Steuerleitung 28 an die Schalteinheit 4.

Die Schalteinheit 4 schaltet den Teilstrom 32 mit der Drossel 30 ab, sobald ein vorgegebener Wert für eine integrierte Durchflussmenge erreicht ist, und aktiviert den Teilstrom 31 mit dem Mengenregler 6 für einen ausreichend langen Zeitraum, um eine Durchflussmenge in einem Zeitintervall auf einen vorgegebenen Wert zu bringen.

Die Verwendung eines Durchflussmessers 29 ermöglicht es auch, eine Lernfunktion zu realisieren. Bei dieser wird für unterschiedliche Einstellungen oder zumindest für eine Einstellung der Mengenreglereinheit zunächst ein Durchflussstrom gemessen. Mit diesem Messwert wird anschließend ein Schaltprofil berechnet, welches für die tatsächlich vorliegenden Bedingungen, insbesondere für einen tatsächlich vorliegenden Versorgungsdruck und/oder für einen tatsächlich vorliegenden Strömungswiderstand eines angeschlossenen Brausekopfes, sicherstellt, dass eine maximale Durchflussmenge innerhalb eines Zeitintervalls eingehalten wird. Diese Lernfunktion kann beispielsweise regelmäßig wiederkehrend und/oder auf Anforderung durch einen Benutzer ausführbar sein.

Fig. 7 zeigt eine schematische Darstellung eines weiteren erfindungsgemäßen Ausführungsbeispiels. Zu den vorangehenden Ausführungsbeispielen konstruktiv und/oder funktionell gleichartige oder identische Bauteile und Funktionseinheiten sind wieder mit denselben Bezugszeichen bezeichnet und nicht noch einmal gesondert beschrieben. Die Ausführungen zu den vorangegangenen Ausführungsbeispielen gelten daher zu Fig. 7 entsprechend.

Bei dem Ausführungsbeispiel gemäß Fig. 7 durchläuft der einlaufende Wasserstrom 2 einen Treiber 11, beispielsweise einen der zuvor beschriebenen Treiber 11, und anschließend einen Durchflussmesser 29, der beispielsweise gemäß dem zuvor beschriebenen Durchflussmesser 29 ausgebildet sein kann. Die Reihenfolge von Treiber 11 und Durchflussmesser 29 kann auch umgekehrt sein.

Der Durchflussmesser 29 in Fig. 7 weist ein Flügelrad 35 auf, dessen Flügel 38 zum Teil oder sämtlich markiert sind, beispielsweise magnetisch, optisch und/oder elektrisch. Ein Sensor 36 wirkt mit dem markierten Flügel 38 oder den markierten Flügeln 38 zusammen, um elektrische Impulse zu generieren. Diese werden zu einer Schalteinheit 4 geleitet, um einen Messwert für einen Durchflussstrom zu bilden.

Die Schalteinheit 4 hat einen Mikrokontroller 5, der über einen bistabilen Schalter 34 ein Ventil 13 ansteuert. Es sind auch andere Schalter verwendbar, aber ein bistabiler Schalter, beispielsweise ein magnetisch arbeitender Schalter, hat den Vorteil, dass nur für eine Betätigung Energie benötigt wird.

Das Ventil 13 ist hierbei als Umschaltventil 37 ausgebildet, um den einlaufenden Wasserstrom 2 wahlweise auf einen ersten Teilstrom 31 und/oder einen zweiten Teilstrom 32 zu leiten. Es ist jedoch auch eine Anordnung von Ventilen 13 gemäß Fig. 6 verwendbar.

Im ersten Teilstrom 31 ist ein Mengenregler 6 vorgesehen, der einen definierten Durchflussstrom als einen ersten Durchflusszustand einstellt.

Dieser definierte Durchflussstrom ist so bemessen, dass eine gesetzlich für eine vorbestimmte Zeiteinheit vorgegebene Durchflussmenge für die gemessene Durchflussmenge durch ein entsprechend langes Verharren in dem zweiten Durchflusszustand eingehalten werden kann.

Sobald die Schalteinheit 4 mit dem Durchflussmesser 29 feststellt, dass eine vorgegebene Durchflussmenge in einem bestimmten Zeitintervall geflossen ist, wird das Umschaltventil 37 betätigt, um den einlaufenden Wasserstrom 2 auf den zweiten Teilstrom 32 zu leiten.

Der zweite Teilstrom 32 in Fig. 7 wird in einem zweiten Durchflusszustand unbehindert (beispielsweise als Bypass 39, oder allenfalls durch eine Drossel 30 behindert) zu dem auslaufenden Wasserstrom 3 geleitet.

Beispielsweise kann das Umschalten zwischen den Durchflusszuständen zu fest hinterlegten Zeitpunkten erfolgen.

Dies wird insbesondere dann günstig sein, wenn die Durchflusszustände jeweils einen definierten Durchflussstrom bilden, beispielsweise durch einen veränderlichen Mengenregler 6 oder mehrere unterschiedliche Mengenregler.

Es kann aber auch ein Verfahren gemäß Figur 8 realisiert werden.

Hierbei zeigt Figur 8 ein Durchflussmenge (V)-Zeit (t)-Diagramm. Dargestellt ist eine Kurve 40, welche eine gesetzliche oder normgemäße Vorgabe einen Durchflussstrom beschreibt, bei welchem in einem Zeitintervall t0 eine Durchflussmenge V0 fließt. Diese Kurve 40 kann dem Mittelwert 23 aus Figur 5 entsprechen.

Angenommen, es wird ein Mengenregler 6 verwendet, dessen Steigung der Kurve 41 entspricht. Die Kurve 41 ist jedoch so verschoben, dass sie durch den Schnittpunkt (t0, V0) läuft.

Wird nun in einem ersten Durchflusszustand einen beliebige Kurve 42 erzeugt, deren Steigung offensichtlich größer als die Vorgabe nach Kurve 40 ist, so gibt es einen Schnittpunkt 43 der Kurve 42 mit der Kurve 41. Die Kurve 42 wird hierbei durch den Durchflussmesser 29 gemessen. Die Kurve 42 kann einen ungeregelten, stark gedrosselten, Durchflussstrom beschreiben.

Dieser Schnittpunkt 43 wird von der Schalteinheit 4 berechnet.

Hieraus ergibt sich ein Zeitpunkt zum Wechsel des Durchflusszustands. Die Schalteinheit 4 verändert das Schaltprofil, um diesen Wechsel zum berechneten Zeitpunkt herbeizuführen.

Wird zu diesem Zeitpunkt der Durchflusszustand gewechselt, so dass der erwähnte Mengenregler 6 übernimmt, so folgt das System der Kurve 41 bis zum Schnittpunkt (t0, V0).

Somit wird die Vorgabe von V0 innerhalb des Zeitintervalls t0 eingehalten, wobei im ersten Durchflusszustand ein höherer Verbrauch als die Vorgabe durch die Kurve 40 ermöglicht wird.

Angenommen, es wird ein Mengenregler 6 verwendet, dessen Steigung der Kurve 44 entspricht. Die Kurve 44 ist jedoch so verschoben, dass sie durch den Schnittpunkt (t0, V0) läuft.

Wird nun in einem ersten Durchflusszustand einen beliebige Kurve 45 erzeugt, deren Steigung offensichtlich kleiner als die Vorgabe nach Kurve 40 ist, so gibt es einen Schnittpunkt 46 der Kurve 45 mit der Kurve 44. Die Kurve 45 wird hierbei durch den Durchflussmesser 29 gemessen. Die Kurve 45 kann einen ungeregelten, insbesondere freien oder ungehinderten, Durchflussstrom beschreiben.

Dieser Schnittpunkt 46 wird von der Schalteinheit 4 berechnet.

Hieraus ergibt sich ein Zeitpunkt zum Wechsel des Durchflusszustands. Die Schalteinheit 4 verändert das Schaltprofil, um diesen Wechsel zum berechneten Zeitpunkt herbeizuführen.

Wird zu diesem Zeitpunkt der Durchflusszustand gewechselt, so dass der erwähnte Mengenregler 6 übernimmt, so folgt das System der Kurve 44 bis zum Schnittpunkt (t0, V0).

Somit wird die Vorgabe von V0 innerhalb des Zeitintervalls t0 eingehalten, wobei im zweiten Durchflusszustand ein höherer Verbrauch als die Vorgabe durch die Kurve 40 ermöglicht wird. Dies entspricht beispielsweise dem zeitlichen Ablauf 22 in Figur 5.

Bei der erfindungsgemäßen Mengenreglereinheit 1 wird somit vorgeschlagen, einen zeitlichen Ablauf 22 eines Durchflussstroms zu erzeugen, indem ein Schaltprofil, mit welchem wenigstens ein Mengenregler 6 zur Veränderung des Durchflussstroms angesteuert wird, abgefahren wird.

### Bezugszeichenliste

- 1: Mengenreglereinheit
- 2: einlaufender Wasserstrom
- 3: auslaufender Wasserstrom
- 4: Schalteinheit
- 5: Mikrokontroller
- 6: Mengenregler
- 7: Regelkern
- 8: Regelkörper
- 9: Regelspalt
- 10: Motor
- 11: Treiber
- 12: Generator
- 13: Ventil
- 14: Speicher
- 15: Datenverbindung
- 16: mobiles Endgerät
- 17: Akku
- 18: Dusche
- 19: Duschbrause
- 20: Wasseranschluss
- 21: Wasserstrahl
- 22: zeitlicher Ablauf
- 23: zeitlicher Mittelwert des Durchflussstroms
- 24: erster Zeitpunkt
- 25: zweiter Zeitpunkt
- 26: Steuerungsleitung
- 27: Steuerungsleitung
- 28: Steuerungsleitung
- 29: Durchflussmesser
- 30: Drossel
- 31: Teilstrom
- 32: Teilstrom
- 33: Turbine
- 34: bistabiler Schalter
- 35: Flügelrad
- 36: Sensor
- 37: Umschaltventil
- 38: Flügel
- 39: Bypass
- 40: Kurve
- 41: Kurve
- 42: Kurve
- 43: Schnittpunkt
- 44: Kurve
- 45: Kurve
- 46: Schnittpunkt

## Patentansprüche

1. Mengenreglereinheit (1), die zumindest einen Mengenregler (6) und zumindest eine Schalteinheit (4) umfasst, wobei die Mengenreglereinheit (1) dazu eingerichtet ist, wenigstens zwei unterschiedliche Durchflusszustände, die voneinander unterschiedliche Durchfluss-Druck-Regelkurven umsetzen, zu realisieren, wobei die Schalteinheit (4) zu einem Umschalten zwischen den wenigstens zwei unterschiedlichen Durchflusszuständen eingerichtet ist, **dadurch gekennzeichnet, dass** in der Schalteinheit (4) ein Schaltprofil hinterlegt ist, bei welchem in einem zeitlichen Ablauf ein vorgegebener Wechsel zwischen diesen wenigstens zwei unterschiedlichen Durchflusszuständen erfolgt und dass die Schalteinheit (4) einen Treiber (11) umfasst, der durch im Durchflussstrom strömendes Wasser antreibbar ist und mit welchem die Schalteinheit (4) betreibbar ist.

2. Mengenreglereinheit (1) nach Anspruch 1, **dadurch gekennzeichnet, dass** wenigstens ein Durchflusszustand der wenigstens zwei unterschiedlichen Durchflusszuständen eine Durchfluss-Druck-Regelkurve des Mengenreglers (6) umsetzt.

3. Mengenreglereinheit (1) nach einem der vorangehenden Ansprüche, **dadurch gekennzeichnet, dass** die Schalteinheit (4) elektrisch ausgebildet ist.

4. Mengenreglereinheit (1) nach Anspruch 1, **dadurch gekennzeichnet, dass** der Treiber (11) einen Generator (12) aufweist.

5. Mengenreglereinheit (1) nach einem der vorangehenden Ansprüche, **dadurch gekennzeichnet, dass** die Mengenreglereinheit (1) den Mengenregler (6) mit einem vorzugsweise motorisch einstellbaren Regelspalt (9) aufweist.

6. Mengenreglereinheit (1) nach einem der vorangehenden Ansprüche, **dadurch gekennzeichnet, dass** die Mengenreglereinheit (1) wenigstens eine wahlweise zuschaltbare Drossel (30) und/oder einen wahlweise zuschaltbaren Bypass (39) aufweist.

7. Mengenreglereinheit (1) nach einem der vorangehenden Ansprüche, **dadurch gekennzeichnet, dass** ein Durchflussmesser (29) zu einer Messung eines Durchflussstroms durch die Mengenreglereinheit (1) ausgebildet ist und wobei der Durchflussmesser (29) ein Teil der Mengenreglereinheit (1) ist.

8. Mengenreglereinheit (1) nach einem der vorangehenden Ansprüche, **dadurch gekennzeichnet, dass** die Schalteinheit (4) einen vorzugsweise veränderlichen Speicher (14) hat, in dem das Schaltprofil hinterlegt ist.

9. Mengenreglereinheit (1) nach einem der vorangehenden Ansprüche, **dadurch gekennzeichnet, dass** die Schalteinheit (4) zum Aufbau einer Datenverbindung (15), über welche das Schaltprofil veränderbar ist, eingerichtet ist.

10. Mengenreglereinheit (1) nach Anspruch 9 , **dadurch gekennzeichnet, dass** die Datenverbindung (15) drahtlos ausgebildet ist.

11. Mengenreglereinheit (1) nach einem der vorangehenden Ansprüche, **dadurch gekennzeichnet, dass** die wenigstens zwei unterschiedlich definierten Durchflussströme jeweils von Null verschieden gewählt werden.

12. Verfahren zur Steuerung eines Durchflussstroms mit einer Mengenreglereinheit (1) wobei in einem zeitlichen Ablauf (22) ein vorgegebener Wechsel zwischen wenigstens zwei unterschiedlichen Durchflusszuständen, die voneinander unterschiedliche Durchfluss-Druck-Regelkurven umsetzen, nach einem hinterlegten Schaltprofil automatisch ausgeführt wird, und wobei eine Schalteinheit (4) einen Treiber umfasst, der durch im Durchflussstrom strömendes Wasser antreibbar ist und mit welchem die Schalteinheit (4) betreibbar ist, und wobei das Schaltprofil in der Schalteinheit (4) hinterlegt ist.

13. Verfahren nach dem vorangehenden Anspruch, **dadurch gekennzeichnet, dass** zum Wechsel zwischen den wenigstens zwei unterschiedlichen Durchflusszuständen ein Steuerspalt eines Mengenreglers (6) vorzugsweise motorisch verändert wird.

14. Verfahren nach einem der Ansprüche 12 oder 13, **dadurch gekennzeichnet, dass** zum Wechsel zwischen den wenigstens zwei unterschiedlichen Durchflusszuständen wenigstens der oder ein Mengenregler (6) und/oder wenigstens eine Drossel (30) und/oder wenigstens ein Bypass (39) zu- oder abgeschaltet wird.

15. Verfahren nach einem der Ansprüche 12 bis 14, **dadurch gekennzeichnet, dass** der zeitliche Ablauf (22) zyklisch wiederholt wird.

16. Verfahren nach einem der Ansprüche 12 bis 15, **dadurch gekennzeichnet, dass** ein Wechsel zwischen den wenigstens zwei unterschiedlichen Durchflusszuständen erfolgt, sobald eine vorgegebene Durchflussmenge überschritten wird.

17. Verfahren nach einem der Ansprüche 12 bis 16, **dadurch gekennzeichnet, dass** ein zeitlicher Mittelwert des Durchflussstroms (23) konstant gehalten wird.

18. Verfahren nach einem der Ansprüche 12 bis 17, **dadurch gekennzeichnet, dass** ein definierter Durchflussstrom zu einem ersten Zeitpunkt (24) erhöht und zu einem zweiten, vorzugsweise späteren oder früheren, Zeitpunkt (25) verringert wird.

19. Verfahren nach einem der Ansprüche 12 bis 18, **dadurch gekennzeichnet, dass** die wenigstens zwei unterschiedlichen Durchflusszustände jeweils von Null verschiedene Durchflussströme haben.

20. Verfahren nach einem der Ansprüche 12 bis 19, **dadurch gekennzeichnet, dass** in einem ersten Schritt wenigstens ein Durchflusstrom gemessen wird und dass in einem zweiten Schritt das Schaltprofil aufgrund des gemessenen Durchflussstroms automatisch berechnet wird.

21. Verfahren nach einem der Ansprüche 12 - 20, wobei die Mengenreglereinheit (1) an einer Dusche (8) verwendet wird

## Claims

1. Flow regulator unit (1) comprising at least one flow regulator (6) and at least one switching unit (4), the flow regulator unit (1) being configured to realize at least two different volumetric flow rate states which implement different volumetric flow rate/pressure control curves and the switching unit (4) being configured to switch between the at least two different volumetric flow rate states, **characterized in that** a switching profile is stored in the switching unit (4), a specified change between these at least two different volumetric flow rate states being implemented with a given temporal sequence in said switching profile, and **in that** the switching unit (4) comprises a driver (11) which is driveable by water flowing in the through-flow and by means of which the switching unit (4) is operable.

2. Flow regulator unit (1) according to Claim 1, **characterized in that** at least one volumetric flow rate state of the at least two different volumetric flow rate states implements a volumetric flow rate/pressure control curve of the flow regulator (6).

3. Flow regulator unit (1) according to either of the preceding claims, **characterized in that** the switching unit (4) has an electrical design.

4. Flow regulator unit (1) according to Claim 1, **characterized in that** the driver (11) comprises a generator (12).

5. Flow regulator unit (1) according to any one of the preceding claims, **characterized in that** the flow regulator unit (1) has the flow regulator (6) with a preferably motor-adjustable control gap (9).

6. Flow regulator unit (1) according to any one of the preceding claims, **characterized in that** the flow regulator unit (1) has at least one optionally connectable reducer (30) and/or at least one optionally connectable bypass (39).

7. Flow regulator unit (1) according to any one of the preceding claims, **characterized in that** a volumetric flow rate meter (29) is designed to measure a through-flow through the flow regulator unit (1), the volumetric flow rate meter (29) being part of the flow regulator unit (1) .

8. Flow regulator unit (1) according to any one of the preceding claims, **characterized in that** the switching unit (4) has a preferably modifiable memory (14), in which the switching profile is stored.

9. Flow regulator unit (1) according to any one of the preceding claims, **characterized in that** the switching unit (4) is configured to establish a data link (15), by means of which the switching profile is modifiable.

10. Flow regulator unit (1) according to Claim 9, **characterized in that** the data link (15) is designed as a wireless data link.

11. Flow regulator unit (1) according to any one of the preceding claims, **characterized in that** the at least two differently defined through-flows are each chosen to differ from zero.

12. Method for controlling a through-flow using a flow regulator unit (1), wherein a specified change between at least two different volumetric flow rate states which implement different volumetric flow rate/pressure control curves is automatically carried out according to a stored switching profile with a given temporal sequence (22) and wherein a switching unit (4) comprises a driver which is driveable by water flowing in the through-flow and by means of which the switching unit (4) is operable, and wherein the switching profile is stored in the switching unit (4).

13. Method according to the preceding claim, **characterized in that** a control gap in a flow regulator (6) is changed, preferably in motor-driven fashion, for the purposes of changing between the at least two different volumetric flow rate states.

14. Method according to either of Claims 12 and 13, **characterized in that** at least the or a flow regulator (6) and/or at least one reducer (30) and/or at least one bypass (39) is connected or deactivated for the purposes of changing between the at least two different volumetric flow rate states.

15. Method according to any one of Claims 12 to 14, **characterized in that** the temporal sequence (22) is repeated cyclically.

16. Method according to any one of Claims 12 to 15, **characterized in that** there is a change between the at least two different volumetric flow rate states as soon as a specified volumetric flow rate has been exceeded.

17. Method according to any one of Claims 12 to 16, **characterized in that** a temporal mean of the through-flow (23) is kept constant.

18. Method according to any one of Claims 12 to 17, **characterized in that** a defined through-flow is increased at a first time (24) and reduced at a second, preferably later or earlier, time (25).

19. Method according to any one of Claims 12 to 18, **characterized in that** the at least two different volumetric flow rate states each have through-flows that differ from zero.

20. Method according to any one of Claims 12 to 19, **characterized in that** at least one through-flow is measured in a first step and **in that** the switching profile is calculated automatically on the basis of the measured through-flow in a second step.

21. Method according to any one of Claims 12-20, wherein the flow regulator unit (1) is used in a shower (8).

## Revendications

1. Unité de régulation de quantité (1) qui comprend au moins un régulateur de quantité (6) et au moins une unité de commutation (4), laquelle unité de régulation de quantité (1) est agencée pour réaliser au moins deux états de circulation différents qui mettent en œuvre des courbes de régulation de pression de circulation différentes, l'unité de commutation (4) étant agencée pour permuter entre les au moins deux états de circulation différents, **caractérisée en ce que** dans l'unité de commutation (4) est consigné un profil de commutation selon lequel une alternance prédéfinie entre ces au moins deux états de circulation différents se produit dans un déroulement temporel et que l'unité de commutation (4) comprend un moteur (11) qui peut être actionné par l'eau s'écoulant dans le flux de circulation et avec lequel l'unité de commutation (4) peut être exploitée.

2. Unité de régulation de quantité (1) selon la revendication 1, **caractérisée en ce qu'**au moins un état de circulation parmi les au moins deux états de circulation met en œuvre une courbe de régulation de pression de circulation du régulateur de quantité (6).

3. Unité de régulation de quantité (1) une des revendications précédentes, **caractérisée en ce que** l'unité de commutation (4) est électrique.

4. Unité de régulation de quantité (1) selon la revendication 1, **caractérisée en ce que** le moteur (11) comporte un générateur (12).

5. Unité de régulation de quantité (1) une des revendications précédentes, **caractérisée en ce que** cette unité de régulation de quantité (1) comporte le régulateur de quantité (6) avec une fente de régulation (9) de préférence réglable par moteur.

6. Unité de régulation de quantité (1) une des revendications précédentes, **caractérisée en ce que** cette unité de régulation de quantité (1) comporte au moins un étrangleur (30) commutable sélectivement et/ou une dérivation (39) commutable sélectivement.

7. Unité de régulation de quantité (1) une des revendications précédentes, **caractérisée en ce qu'**un débitmètre (29) est configuré pour mesurer un flux de circulation traversant l'unité de régulation de quantité (1) et que ce débitmètre (29) fait partie de l'unité de régulation de quantité (1).

8. Unité de régulation de quantité (1) une des revendications précédentes, **caractérisée en ce que** l'unité de commutation (4) a une mémoire (14) de préférence modifiable dans laquelle le profil de commutation est consigné.

9. Unité de régulation de quantité (1) une des revendications précédentes, **caractérisée en ce que** l'unité de commutation (4) est agencée pour établir une liaison de données (15) par le biais de laquelle le profil de commutation peut être modifié.

10. Unité de régulation de quantité (1) une des revendications précédentes, **caractérisée en ce que** la liaison de données (15) est configurée sans fil.

11. Unité de régulation de quantité (1) une des revendications précédentes, **caractérisée en ce que** les au moins deux flux de circulation définis différemment sont tous deux choisis différents de zéro.

12. Procédé pour contrôler un flux de circulation avec une unité de régulation de quantité (1) selon lequel dans un déroulement temporel (22) est effectuée automatiquement suivant un profil de commutation consigné une alternance prédéfinie entre au moins deux états de circulation différents qui mettent en œuvre des courbes de régulation de pression de circulation différentes entre elles, selon lequel une unité de commutation (4) comprend un moteur qui peut être actionné par l'eau s'écoulant dans le flux de circulation et avec lequel l'unité de commutation (4) peut être exploitée, et selon lequel le profil de commutation est consigné dans l'unité de commutation (4).

13. Procédé selon la revendication précédente, **caractérisé en ce que**, pour alterner entre les au moins deux états de circulation différents, une fente de contrôle d'un régulateur de quantité (6) est modifiée de préférence par moteur.

14. Procédé selon une des revendications 12 ou 13, **caractérisé en ce que**, pour alterner entre les au moins deux états de circulation différents, au moins le ou un régulateur de quantité (6) et/ou au moins un étrangleur (30) et/ou au moins une dérivation (39) sont activés ou désactivés.

15. Procédé selon une des revendications 12 à 14, **caractérisé en ce que** le déroulement temporel (22) est répété de façon cyclique.

16. Procédé selon une des revendications 12 à 15, **caractérisé en ce qu'**une alternance entre les au moins deux états de circulation différents se produit dès qu'une quantité de flux prédéfinie est dépassée.

17. Procédé selon une des revendications 12 à 16, **caractérisé en ce qu'**une valeur moyenne temporelle du flux de circulation (23) est maintenue constante.

18. Procédé selon une des revendications 12 à 17, **caractérisé en ce qu'**un flux de circulation défini est augmenté à un premier moment (24) et réduit à un deuxième moment (25) de préférence ultérieur ou antérieur.

19. Procédé selon une des revendications 12 à 18, **caractérisé en ce que** les au moins deux états de circulation différents offrent chacun des flux de circulation différents de zéro.

20. Procédé selon une des revendications 12 à 19, **caractérisé en ce que**, dans une première étape, au moins un flux de circulation est mesuré et que, dans une deuxième étape, le profil de commutation est calculé automatiquement sur la base du flux de circulation mesuré.

21. Procédé selon une des revendications 12 à 20, selon lequel l'unité de régulation de quantité (1) est utilisée sur une douche (8).
